# FASCICULE DE BREVET EUROPEEN

(11) **EP 2 018 088 B1**
(45) Date de publication et mention de la délivrance du brevet: **06.04.2011**
(21) Numéro de dépôt: 08012455.5
(22) Date de dépôt: 10.07.2008
(51) Int. Cl.: H05B 6/10, B64C 3/28

(54) **Procédé et dispositif pour coller la coiffe métallique d'un bord d'attaque d'une voilure**
Verfahren und Anordnung zum Kleben die Metallkappe einer Flügelvorderkante
Process and apparatus for gluing the metal cap of an airfoil leading egde

(30) Priorité: 17.07.2007 FR 0705154
(43) Date de publication de la demande: 21.01.2009
(73) Titulaire: EUROCOPTER, 13725 Marignane Cédex (FR)
(72) Inventeur: Boschet, Patrick, 78180 Montigny Le Bretonneux (FR); Navarre, Thomas, 75019 Paris (FR); Lorcet, Bruno, 91940 Les Ulis (FR)
(74) Mandataire: GPI & Associés

(56) Documents cités:
- EP-A- 0 529 917
- WO-A-01/30116

## Description

La présente invention concerne un procédé et un dispositif pour coller la coiffe métallique d'un bord d'attaque d'une voilure d'un aéronef, une pale d'un rotor de giravion par exemple.

En effet, le bord d'attaque d'une pale d'un rotor de giravion est protégé contre les impacts, par exemple par une coiffe métallique en forme de U collée sur la structure de la pale ou encore par une coiffe réalisée à partir de matériaux composites conformément au document EP 0529917A par exemple. La coiffe métallique protège ainsi le bord d'attaque de la pale ainsi que les parties de l'extrados et de l'intrados de cette pale directement adjacentes au bord d'attaque.

Lorsque cette coiffe métallique est détériorée suite à des impacts, voire même à un phénomène d'érosion, il convient de la remplacer par une coiffe métallique neuve afin de s'assurer que la pale continuera à être correctement protégée.

Par ailleurs, il peut être nécessaire d'enlever le bord d'attaque pour réparer la structure de la pale, notamment si cette pale est en matériaux composites en raison d'un décollement de couches superficielles de sa structure. Une fois la réparation effectuée, le bord d'attaque sera remis en place.

On connaît un dispositif permettant de recoller la coiffe métallique de bord d'attaque d'une pale en utilisant un adhésif disposé entre la coiffe métallique et la structure de la pale.

Ce dispositif met en oeuvre un outillage chauffant qui apporte l'énergie nécessaire à la polymérisation d'un adhésif afin de solidariser la coiffe métallique à la structure de la pale, l'adhésif étant placé entre la coiffe métallique et la structure de la pale. Cet outillage chauffant est constitué d'un tapis disposé sur la surface externe de la coiffe métallique.

Ce tapis est alors parcouru par une résistance chauffante noyée dans une couche de silicone. En étant alimentée électriquement, la résistance chauffante chauffe, ce qui permet de faire adhérer la coiffe métallique sur la structure de la pale. En effet, la résistance chauffante échauffe alors la coiffe métallique par conduction qui transmet à son tour sa chaleur à l'adhésif et provoque ainsi la polymérisation de ce dernier.

Ce dispositif fonctionne correctement. Toutefois, il présente quelques inconvénients.

Le premier inconvénient est la conséquence de l'utilisation d'une résistance électrique. Tous les éléments entourés par le tapis chauffant sont alors chauffés par ce tapis, c'est-à-dire à la fois la coiffe métallique, l'adhésif et la structure. Il en résulte une consommation d'énergie qui n'est nécessairement pas optimisée.

De même, un deuxième inconvénient réside en un effet de bord. En effet, sur les bords du dispositif, on assiste à une forte perte de chaleur par conduction ce qui rend finalement le dispositif hétérogène. Certaines zones de l'ensemble coiffe métallique/ structure de la pale sont donc moins chauffées que d'autres ce qui entraîne au final une surconsommation d'énergie pour compenser les pertes.

Un troisième inconvénient est la conséquence des rampes de montée en température de la résistance chauffante, ces dernières étant très lentes, de l'ordre de 1.5 degré Celsius par minute. La durée du cycle de chauffage de la coiffe métallique atteint alors facilement huit heures ce qui est pénalisant d'un point de vue économique sur le plan industriel.

En outre, on soumet la voilure à des contraintes de température importantes pendant une longue période, du fait de la lenteur des montées en température, ce qui peut conduire à une dégradation de cette voilure.

Enfin, la fabrication du tapis est très longue, donc onéreuse et peu compatible avec des demandes industrielles urgentes, ce qui est malheureusement le cas lorsqu'un manufacturier possédant un tapis chauffant détérioré doit réparer une pale.

Enfin, on connaît par le document WO 01/30116 un dispositif de collage comprenant un moyen de chauffage par induction destiné à faire fondre un adhésif. Toutefois, l'application de ce dispositif au collage de la coiffe métallique de bord d'attaque d'une voilure semble délicate.

La présente invention a alors objet de proposer un dispositif de collage d'une coiffe métallique de bord d'attaque homogène et rapide permettant de s'affranchir des limitations des dégivreurs mentionnés ci-dessus.

Selon l'invention, un dispositif de collage pour coller une coiffe métallique de protection d'un bord d'attaque d'une voilure d'aéronef, ladite coiffe métallique devant être collée contre ladite voilure à l'aide d'un adhésif, est remarquable en ce qu'il comporte une carcasse rigide dans laquelle est insérée un moyen de chauffage par induction de la coiffe métallique à coller sur la voilure.

Par conséquent, le moyen de chauffage par induction va chauffer la coiffe métallique qui va elle-même chauffer l'adhésif par conduction afin de le faire polymériser. Plus précisément, le moyen de chauffage par induction crée un champ magnétique variable, comprenant une pluralité de lignes de champ magnétique, qui induit des forces électromotrices au sein du matériau métallique de la coiffe métallique. Ces forces électromotrices donnent alors naissance à des courants induits appelés courants de Foucault qui échauffent alors le matériau de la coiffe métallique par effet Joule.

Il n'y a pas de pertes dues à des effets de bord ou encore à un chauffage d'éléments qui ne sont pas concernés par le collage de la coiffe métallique de bord d'attaque puisque seuls les éléments métalliques sont chauffés par induction.

Le moyen de chauffage par induction chauffe alors très rapidement la coiffe métallique, notamment du fait de l'absence de pertes thermiques. De plus, ce mode de chauffage est nettement plus rapide qu'un mode de chauffage par conduction, du type mis en oeuvre par l'art antérieur par exemple.

En outre, la température de l'adhésif est homogène dans la mesure où les lignes de champ magnétique générées par le moyen de chauffage par induction sont aussi réparties de manière homogène sans difficultés. L'absence de pertes dues à des effets de bord garantit de plus l'homogénéité de la température de l'adhésif, cette homogénéité étant primordiale pour le collage de la coiffe de bord d'attaque.

Il n'est alors par exemple pas nécessaire de chauffer plus longtemps que prévu la coiffe métallique puisque les températures de chauffage sont parfaitement maîtrisées.

Enfin, le dispositif de collage chauffant uniquement la coiffe métallique, et par conduction l'adhésif via cette dernière, ce dispositif ne risque pas de détériorer la structure de la voilure en la chauffant de manière inconsidérée.

Avantageusement, le moyen de chauffage par induction est agencé entre une première et une deuxième couches primaires en une matière thermo-expensible, de type silicone par exemple, la deuxième couche primaire épousant la forme de la coiffe métallique lors de l'utilisation du dispositif.

Le dispositif de collage est alors pourvu successivement d'une carcasse rigide non déformable, de la première couche primaire, du moyen de chauffage par induction puis de la deuxième couche primaire.

En outre, classiquement, les coiffes métalliques de bord d'attaque ont une forme en U. Ainsi, les première et deuxième couches primaires ont aussi une forme en U. La deuxième couche primaire est alors en contact avec la surface extérieure de la coiffe métallique, la surface intérieure de la coiffe métallique étant en contact avec l'adhésif servant à son collage sur la voilure.

Par ailleurs, les première et deuxième couches primaires sont en une matière thermo-expensible. Ainsi, lorsque le moyen de chauffage par induction chauffe la coiffe métallique, celle-ci restitue une partie de la chaleur à la deuxième couche primaire par conduction.

Du fait de sa consistance, la deuxième couche primaire se met ainsi à se dilater. La carcasse étant rigide, il lui est impossible de se déformer sous l'effet de la dilatation de la deuxième couche primaire. Cette deuxième couche primaire exerce alors une pression sur la coiffe métallique.

Ce phénomène est particulièrement important puisqu'il contribue à solidariser correctement la coiffe métallique à la voilure.

Sous l'action du moyen de chauffage par induction, l'adhésif polymérise et va donc solidariser la coiffe métallique à la structure de la voilure. De plus, la deuxième couche primaire va se dilater pour exercer une pression sur la coiffe métallique pour optimiser le collage.

De même, la première couche primaire se dilate sous l'effet de la chaleur et contribue à la pression exercée par le dispositif

Par ailleurs, la deuxième couche primaire peut avoir une épaisseur comprise entre 1 et 2 millimètres, de préférence 1.5 millimètre. De façon surprenante, le chauffage par induction est maximisé avec une telle épaisseur.

Selon une variante, le dispositif selon l'invention comporte une couche secondaire en une matière thermo-expensible, en silicone par exemple, disposée entre ladite carcasse et ladite première couche primaire. Par suite, le dispositif de collage est alors pourvu successivement d'une carcasse rigide non déformable, de la couche secondaire, de la première couche primaire, du moyen de chauffage par induction puis de la deuxième couche primaire

Cette couche secondaire permet d'isoler la carcasse du dispositif afin que cette carcasse ne soit pas chauffée par le moyen de chauffage par induction, ce dernier devant essentiellement consacrer son énergie à chauffer la coiffe métallique.

Ainsi, la couche secondaire a avantageusement une épaisseur comprise entre 6 et 8 millimètres.

Optionnellement, une plaque métallique est agencée entre la couche secondaire et ladite première couche primaire.

En effet, cette plaque métallique va être chauffée par le moyen de chauffage par induction du fait de la répartition des lignes de champ magnétique générées par le moyen de chauffage. Ainsi, elle pourra échauffer la première couche primaire et la couche secondaire pour que ces dernières se dilatent et participent à la mise en pression de la coiffe métallique par le dispositif de collage.

Afin de maximiser le chauffage de la plaque métallique, la première couche primaire a une épaisseur comprise entre 1 et 2 millimètres, de préférence 1.5 millimètre.

La pression générée par le dispositif de collage participe efficacement au collage de la coiffe métallique à la voilure. Néanmoins, de manière surprenante, cette pression peut devenir néfaste à partir d'un certain seuil.

En effet, si la pression est trop élevée, l'adhésif risque d'être éjecté de l'espace séparant la coiffe métallique de la voilure.

Par suite, le dispositif selon l'invention comporte éventuellement un moyen d'absorption d'énergie, des ressorts tarés par exemple, solidarisé à ladite carcasse.

Selon la variante mise en oeuvre, le moyen d'absorption sera agencé entre la carcasse rigide et la première couche primaire, ou encore entre la carcasse rigide et la couche secondaire.

En outre, il est intéressant d'adjoindre au dispositif de collage un moyen de contrôle de la pression exercée par le dispositif sur la coiffe métallique afin de s'assurer que la pression demeure dans des limites acceptables.

Le moyen de contrôle est ainsi muni d'une fibre optique, noyée dans la deuxième couche primaire par exemple, relié à l'organe de contrôle.

Enfin, il est possible d'optimiser la géométrie du moyen de chauffage par induction pour éviter de créer des zones chaudes qui conduiraient à un chauffage hétérogène de la coiffe métallique.

Le moyen de chauffage par induction comporte alors quatre groupes de fils de Litz, un premier et deuxième groupes étant disposés entre les première et deuxième couches primaires de manière à se situer sur l'extrados de la coiffe, un troisième et un quatrième groupes étant disposés entre les première et deuxième couches primaires de manière à se situer sur l'intrados de la coiffe métallique.

De plus, le premier groupe est séparé du deuxième groupe de manière à libérer un espace non chauffé, le troisième groupe étant aussi séparé du quatrième groupe.

Ainsi, les lignes de champ magnétique générées par le moyen de chauffage chauffent de manière parfaitement homogène la coiffe métallique.

La présente invention a de plus pour objet un procédé de collage permettant de réaliser un collage rapide et non dégradant d'une coiffe métallique sur une voilure.

Selon l'invention, un procédé pour coller une coiffe métallique de protection d'un bord d'attaque d'une voilure d'aéronef, un adhésif étant disposé entre la coiffe métallique et la voilure, un dispositif de collage étant agencé autour d'une face externe de la coiffe métallique, est remarquable en ce que l'on procède successivement aux étape suivantes :
a) on chauffe la coiffe métallique à l'aide du dispositif de collage pour atteindre une première température à laquelle l'adhésif est liquéfié pour bien mouiller les surfaces à assembler à savoir la voilure et la coiffe métallique,
b) à l'issue d'une première durée, on augmente la température de la coiffe pour atteindre une deuxième température permettant la polymérisation de l'adhésif,
c) à l'issue d'une deuxième durée, on augmente la température de la coiffe métallique pour atteindre une troisième température afin de permettre une polymérisation complète et homogène, et
d) à l'issue d'une troisième durée, on fait décroître la température de ladite coiffe métallique.

Ce procédé est d'autant plus efficace lorsqu'il est mis en oeuvre par le dispositif selon l'invention qui est muni d'un moyen de chauffage par induction permettant une mise en température très rapide de la coiffe.

Durant l'étape a), l'adhésif mouille parfaitement la coiffe métallique et la structure de la voilure ce qui garantit un collage homogène.

Au cours de l'étape b), la polymérisation de l'adhésif débute pour que le collage devienne effectif.

Enfin, durant l'étape c) on chauffe à une température relativement élevée, la troisième température étant supérieure à la température théorique de polymérisation de l'adhésif, mais pendant une courte durée pour terminer la polymérisation de l'adhésif.

Pour optimiser la durée du procédé, la première durée est comprise entre 10 et 20 minutes et la troisième durée est comprise entre 3 et 10 minutes.

De même, la deuxième durée, comprise entre 10 et 20 minutes, s'achève lorsque la polymérisation de l'adhésif atteint 60% à 80% de la polymérisation complète de l'adhésif.

On note que la troisième durée est très courte de manière à optimiser la durée totale du procédé mis en oeuvre. Afin d'atteindre une telle troisième durée, la troisième température est avantageusement supérieure à la température de polymérisation de l'adhésif. Il devient ainsi possible d'achever la polymérisation de l'adhésif et donc d'obtenir une conversion totale de cet adhésif, d'un état liquide à un état solide, en un temps restreint.

L'invention et ses avantages apparaîtront avec plus de détails dans le cadre de la description qui suit avec des exemples de réalisation donnés à titre illustratif en référence aux figures annexées qui représentent :
- la figure 1, une coupe d'une variante de l'invention,
- la figure 2, une vue schématique présentant un moyen d'absorption,
- la figure 3, une coupe montrant un agencement optimisé du moyen de chauffage, et
- la figure 4, un diagramme explicitant les étapes selon l'invention,

Les éléments présents dans plusieurs figures distinctes sont affectés d'une seule et même référence.

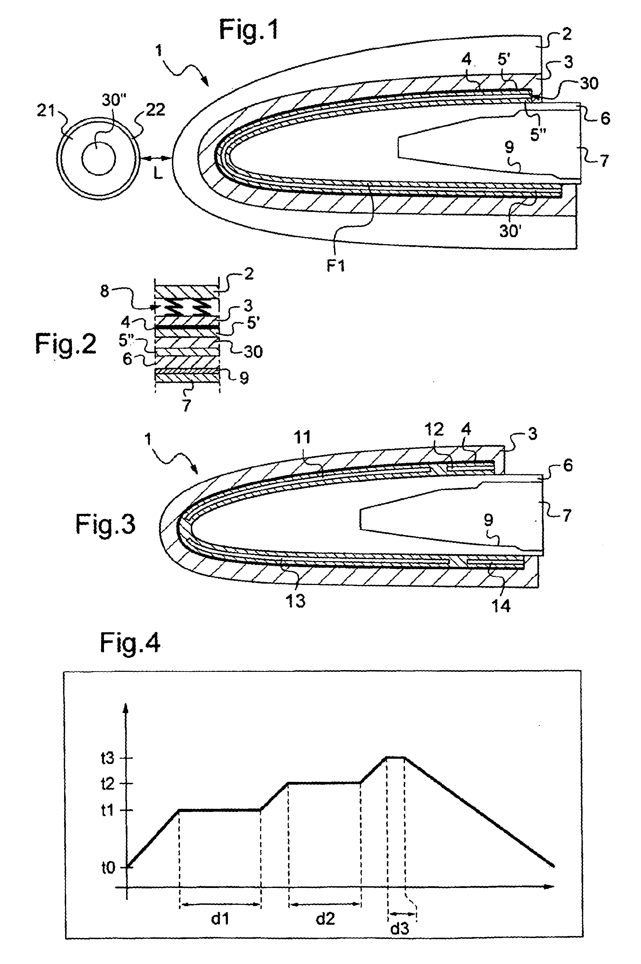

La figure 1 présente une coupe d'une variante de l'invention.

Un adhésif 9 est disposé sur l'extrémité d'une voilure 7, une pale de giravion par exemple, afin de solidariser une coiffe métallique 6 de bord d'attaque sur cette extrémité de la voilure.

De plus, un dispositif de collage est agencé sur la face extérieure F1 de la coiffe métallique pour permettre à l'adhésif de polymériser, la polymérisation étant un processus chimique par lequel un adhésif est fixé à des matières en étant chauffé.

Le dispositif de collage 1 comporte une carcasse rigide dans laquelle est agencé un moyen de chauffage par induction 30 de la coiffe métallique 6.

Plus précisément, le moyen de chauffage par induction est inséré entre une première et une deuxième couches primaires 5', 5" d'un matériau thermo-expensible tel que de la silicone.

En outre, selon une variante de l'invention, le dispositif de collage 1 est pourvu d'une couche secondaire 3 en une matière isolante thermo-expensible et d'une plaque métallique 4, du titane par exemple.

Le dispositif de collage 1 comporte alors successivement, une carcasse rigide 2, une couche secondaire 3, une plaque métallique 4, une première couche primaire 5', un moyen de chauffage par induction 30 et une deuxième couche secondaire 5" qui épousent la surface extérieure F1 de la coiffe métallique 6.

Ainsi, lorsqu'il est commandé par un moyen de commande non représenté sur les figures, le moyen de chauffage par induction chauffe la coiffe métallique qui échauffe à son tour l'adhésif pour le faire polymériser.

Par ailleurs, le moyen de chauffage par induction 30 chauffe aussi la plaque métallique 4.

Dans ces conditions, la deuxième couche primaire 5" en contact avec la coiffe métallique 6 voit sa température augmenter et se met à se dilater du fait de sa matière thermo-expensible. Il en va de même pour la couche secondaire 3 et la première couche primaire 5' qui sont en contact avec la plaque métallique 4.

La carcasse 2 étant indéformable de part sa rigidité, la dilatation des couches 5', 5", 3 thermo-expensibles a pour conséquence la création d'une force de pression du dispositif de collage 1 sur la coiffe métallique 6, cette force de pression favorisant l'adhésion de la coiffe métallique 6 sur l'extrémité de la voilure 7.

Afin de maximiser le procédé de collage, les première et deuxième couches 5', 5" ont une épaisseur comprise entre 1 et 2 millimètres, de préférence 1.5 millimètre. Ainsi, le moyen de chauffage par induction 30 se trouve à une distance optimale des éléments qu'il doit chauffer de façon homogène, à savoir la coiffe métallique 6 et la plaque métallique 4.

A contrario, la couche secondaire 3 a une épaisseur comprise entre 6 et 8 millimètres. Cette couche secondaire isole ainsi la carcasse 2 qui ne peut être chauffée par le moyen de chauffage par induction.

Par ailleurs, le moyen de chauffage par induction est avantageusement muni d'un bobinage d'un seul fil, dénommé usuellement « fil de Litz » par l'homme du métier. Un tel fil de Litz est constitué de brins élémentaires isolés entre eux, répartis sinusoïdalement dans une protection externe, chaque brin occupant périodiquement tous les emplacements possibles à l'intérieur de cette protection externe. Statistiquement, tous les brins sont ainsi soumis aux mêmes contraintes électromagnétiques. Il s'ensuit que tous les brins transportent des courants similaires ce qui implique une densité de courant uniforme au sein de ce fil.

Le moyen de chauffage par induction comporte donc une bobine munie d'un circuit 30', dénommé « circuit aller » par commodité, agencé entre les première et deuxième couches primaire 5', 5" à l'intérieur de la carcasse rigide.

De plus, la bobine du moyen de chauffage par induction 30 comporte un circuit 30", dénommé « circuit retour » par commodité. Le circuit retour 30" est agencé dans une gaine métallique 22, isolé thermiquement, à l'aide d'une couche d'isolant 21.

Avantageusement, la gaine métallique 22 enserrant le circuit retour 30" du moyen de chauffage par induction 30 est éloigné de la carcasse rigide 2 d'une distance L valant au moins 100 millimètres pour que ce circuit retour n'ait pas d'influence sur le champ magnétique créé par le circuit aller 30'.

Enfin, pour contrôler le cycle de chauffage du dispositif de collage 1, le moyen de commande agit d'une part sur la fréquence, de l'ordre 50 kilohertz, appliquée au moyen de chauffage, et d'autre part la densité de courant fournie, de l'ordre de 4.10⁶ à 6.10⁶ Ampères par mètre carré.

En outre, il peut être intéressant de surveiller la pression exercée par le dispositif de collage 1 sur la coiffe métallique 1 grâce à la dilatation des première et deuxième couches primaires 5', 5" et à la couche secondaire 3. En effet, une pression trop importante pourrait avoir des conséquences néfastes, l'adhésif pouvant alors être éjecté de la voilure, par fluage de cet adhésif, en cas de pression importante.

Par suite, le dispositif de pression est éventuellement pourvu d'un moyen de contrôle non représenté de cette pression. Ce moyen de contrôle est muni d'une fibre optique reliée à un organe de contrôle, ledit organe étant par exemple intégré au moyen de commande du dispositif de collage 1.

La fibre optique est alors disposée dans une des couches du dispositif de collage 1, de préférence la deuxième couche primaire 5".

Une variation de la pression exercée sur la coiffe métallique a pour conséquence une variation de la pression exercée sur la fibre optique et donc sur l'intensité lumineuse la traversant. En fonction de cette intensité lumineuse, l'organe de contrôle en déduit la pression exercée et communique ces informations au moyen de commande qui peut par exemple arrêter le moyen de chauffage par induction en cas de pression excessive.

De même, en référence à la figure 2, il est possible de prévoir un moyen d'absorption d'énergie, solidarisé à la carcasse rigide 2, en cas de dilation trop importante des matières thermo-expensibles.

Ce moyen d'absorption d'énergie comporte alors des ressorts tarés 8 qui sont solidarisés à la carcasse rigide 2, et à la deuxième couche secondaire 3. Si la pression exercée par le dispositif de collage sur la coiffe métallique 6 tend à devenir supérieure à un seuil prédéterminé, les ressorts tarés 8 se rétractent ce qui permet de maintenir la pression exercée sur la coiffe métallique au maximum au niveau dudit seuil.

On note que si la variante de l'invention mise en oeuvre ne comporte pas de couche secondaire 3 et de plaque métallique 4, alors les ressorts tarés seront solidarisés à la première couche primaire 5'.

La figure 3 présente une coupe montrant un agencement optimisé du moyen de chauffage.

Le circuit aller 30' du moyen de chauffage par induction 30 agencé entre les première et deuxième couches primaires, comportent alors quatre groupes de fils de Litz séparés, une matière isolante telle que de la silicone étant disposée entre deux groupes adjacents.

Par conséquent, un premier et un deuxième groupes 11, 12 sont disposés au niveau de l'extrados de la coiffe métallique 6. A contrario, les troisième et quatrième groupes 13, 14 sont agencés au niveau de l'intrados de cette coiffe métallique.

Cet agencement particulier du moyen de chauffage par induction permet d'éviter la formation de points chauds qui rendraient hétérogène le chauffage réalisé par le dispositif de collage 1.

De plus, afin de pouvoir adapter le dispositif sur n'importe quelle voilure, il est envisageable de le réaliser en deux blocs distincts reliés par des ressorts au niveau du bord d'attaque de la coiffe métallique.

Le premier bloc comprendrait alors les premier et deuxième groupes 11 et 12 alors, que le deuxième bloc posséderait les troisième et quatrième blocs 13 et 14.

La figure 4 présente le procédé mis en oeuvre par le dispositif de collage selon l'invention.

Lors d'une étape préliminaire, un opérateur commence à disposer un adhésif sur l'extrémité 7 de la voilure devant accueillir une coiffe métallique de bord d'attaque.

Il dispose ensuite la coiffe métallique puis agence le dispositif de collage 1 sur la coiffe métallique.

Le collage à proprement parler peut alors débuter.

Durant une étape a), le moyen de commande active le moyen de chauffage par induction pour que la coiffe métallique atteigne une première température t1. La température augmente alors rapidement, à une vitesse comprise entre 2°C par minute et 10°C par minute.

Si on considère que l'adhésif est un adhésif de classe 120°C, à savoir un adhésif qui polymérise à 120°C, il faut 6 minutes pour atteindre une première température t1 de l'ordre de 80°C à partir d'une température ambiante t0 de 20°C.

A cette première température t1, l'adhésif est suffisamment fluide pour mouiller parfaitement les surfaces, à savoir l'extrémité de la voilure et la coiffe métallique, avec lesquelles il est en contact ce qui est impératif pour obtenir un collage homogène. Lesdites surfaces seront parfaitement mouillées quand la zone d'interface des surfaces à coller est exempte de bulles d'air, cette zone d'interface ne comportant que de l'adhésif réparti de façon homogène afin d'imprégner les tissus à coller.

A l'issue d'une première durée d1, comprise entre 10 et 20 minutes, l'étape b) débute.

Le moyen de commande augmente alors la température de la coiffe métallique 6, à une vitesse comprise entre 5 et 10°C par minute, pour atteindre une deuxième température t2 permettant à la polymérisation de commencer.

L'adhésif étant de la classe 120°C, la deuxième température à laquelle la polymérisation s'engage est de l'ordre de 110°C, cette deuxième température dépendant de la matière chimique constituant l'adhésif utilisé.

A l'issue d'une deuxième durée d2, comprise entre 10 et 20 minutes, la polymérisation de l'adhésif atteint 60% à 80% de la polymérisation complète.

Pour réduire le temps de chauffe, à l'issue de cette deuxième durée d2, le moyen de commande engage l'une étape c) pour terminer la polymérisation. Il augmente alors la température de la coiffe métallique, à une vitesse comprise entre 5 et 15°C par minute mais pouvant atteindre 30°C par minute si nécessaire, pour atteindre une troisième température t3 de l'ordre de 140°C pour un adhésif de la classe 120°C.

Le moyen de commande maintient cette troisième température durant une troisième durée d3 très courte, comprise entre 3 minutes et 10 minutes, avant de faire décroître progressivement la température, à une vitesse de l'ordre de 2°C par minute, durant une étape d).

Le procédé de collage est par conséquent très rapide. En outre, de part la spécificité du moyen de chauffage, le chauffage est réalisé de manière homogène sur l'intégralité de la coiffe métallique.

En outre, on maintient des températures importantes t3 durant une durée courte d3 ce qui ne risque pas d'endommager la voilure.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possible. Il est bien sûr envisageable de remplacer un moyen décrit par un moyen équivalent sans sortir du cadre de la présente invention.

Notamment, les valeurs des première, deuxième et troisième températures, ainsi que les valeurs des première, deuxième et troisième durées mentionnées précédemment dépendent de l'adhésif utilisé, et conviennent plus précisément à un adhésif de la classe 120°C.

En fonction des caractéristiques de l'adhésif servant à coller la coiffe de bord d'attaque, ces différentes valeurs peuvent bien évidemment être différentes de celles mentionnées, sans sortir du cadre de l'invention le procédé demeurant identique.

## Revendications

1. Dispositif de collage (1) pour coller une coiffe métallique (6) de protection d'un bord d'attaque d'une voilure (7) d'aéronef, ladite coiffe métallique (6) devant être collée contre ladite voilure (7) à l'aide d'un adhésif (9), ledit dispositif comportant une carcasse rigide (2) dans laquelle est inséré un moyen de chauffage (30) par induction de ladite coiffe métallique (6),
**caractérisé en ce que** ledit moyen de chauffage (30) par induction est agencé entre une première et une deuxième couches primaires (5', 5") en une matière thermo-expensible, ladite deuxième couche primaire (5") épousant la forme de ladite coiffe métallique (6) lors de l'utilisation dudit dispositif (1).

2. Dispositif selon la revendication 1,
**caractérisé en ce que** ladite deuxième couche primaire (5") a une épaisseur comprise entre 1 et 2 millimètres.

3. Dispositif selon l'une quelconque des revendications précédentes,
**caractérisé en ce que** ladite première couche primaire (5') a une épaisseur comprise entre 1 et 2 millimètres.

4. Dispositif selon l'une quelconque des revendications précédentes,
**caractérisé en ce qu'**il comporte une couche secondaire (3) en une matière thermo-expensible disposée entre ladite carcasse rigide (2) et ladite première couche primaire (5').

5. Dispositif selon la revendication 4,
**caractérisé en ce que** ladite couche secondaire (3) a une épaisseur comprise entre 6 et 8 millimètres.

6. Dispositif selon l'une quelconque des revendications 4 à 5,
**caractérisé en ce qu'**une plaque métallique (4) est agencée entre ladite couche secondaire (3) et ladite première couche primaire (5').

7. Dispositif selon l'une quelconque des revendications précédentes,
**caractérisé en ce qu'**il comporte un moyen d'absorption d'énergie (8) solidarisé à ladite carcasse (2).

8. Dispositif selon l'une quelconque des revendications précédentes,
**caractérisé en ce qu'**il est pourvu d'un moyen de contrôle de la pression exercée par ledit dispositif (1) sur ladite coiffe (6).

9. Dispositif selon la revendication 8,
**caractérisé en ce que** ledit moyen de contrôle est muni d'une fibre optique reliée à un organe de contrôle.

10. Dispositif selon l'une quelconque des revendications 8 à 9,
**caractérisé en ce que** ladite fibre optique est noyée dans ladite deuxième couche primaire (5").

11. Dispositif selon l'une quelconque des revendications précédentes,
**caractérisé en ce que** ledit moyen de chauffage (30) par induction comportant quatre groupes (11, 12, 13, 14) de fils de Litz, un premier et deuxième groupes (11, 12) sont disposés entre les première et deuxième couches primaires (5', 5") de manière à se situer sur l'extrados de ladite coiffe (6), un troisième et un quatrième groupes (13, 14) étant disposés entre les première et deuxième couches primaires (5', 5") de manière à se situer sur l'intrados de ladite coiffe métallique (6).

12. Dispositif selon la revendication 11,
**caractérisé en ce que** ledit premier groupe (11) est séparé dudit deuxième groupe (12) de manière à libérer un espace non chauffé, ledit troisième groupe (13) étant aussi séparé dudit quatrième groupe (14).

13. Procédé pour coller une coiffe métallique (6) de protection d'un bord d'attaque d'une voilure d'aéronef, un adhésif (9) étant disposé entre ladite coiffe métallique (6) et ladite voilure (7), un dispositif de collage (1) selon l'une quelconque des revendications 1 à 12 étant agencé autour d'une face externe (F1) de ladite coiffe métallique (6),
**caractérisé en ce que** l'on procède successivement aux étapes suivantes :
a) on chauffe par induction ladite coiffe métallique (6) à l'aide dudit dispositif de collage (1) pour atteindre une première température (t1) à laquelle ledit adhésif (9) est liquéfié pour mouiller ladite voilure (7) et ladite coiffe métallique (6),
b) à l'issue d'une première durée (d1), on augmente la température de ladite coiffe pour atteindre une deuxième température (t2) permettant la polymérisation dudit adhésif (9).
c) à l'issue d'une deuxième durée (d2), on augmente la température de ladite coiffe métallique (6) pour atteindre une troisième température (t3) afin de permettre une polymérisation complète et homogène, et
d) à l'issue d'une troisième durée (d3), on fait décroître la température de ladite coiffe métallique.

14. Procédé selon la revendication 13,
**caractérisé en ce que** ladite première durée (d1) est comprise entre 10 et 20 minutes.

15. Procédé selon l'une quelconque des revendications 13 à 14,
**caractérisé en ce que** ladite deuxième durée (d2) est comprise entre 10 et 20 minutes.

16. Procédé selon l'une quelconque des revendications 13 à 15,
**caractérisé en ce que** ladite troisième durée (d3) est comprise entre 3 et 10 minutes.

17. Procédé selon l'une quelconque des revendications 13 à 16,
**caractérisé en ce que** ladite deuxième durée (d2) s'achève lorsque la polymérisation dudit adhésif (9) atteint 60% à 80% de la polymérisation complète de l'adhésif (9).

18. Procédé selon l'une quelconque des revendications 13 à 17,
**caractérisé en ce que** ladite troisième température (t3) est supérieure à la température théorique de polymérisation de l'adhésif (9).

## Claims

1. Bonding device (1) for bonding a metal cap (6) for protecting a leading edge of an aircraft aerofoil (7), said metal cap (6) being for bonding against said aerofoil (7) with the help of an adhesive (9), said device comprising a rigid framework (2) in which an induction heating means (30) is inserted for heating said metal cap (6),
**characterized in that** said induction heating means (30) is arranged between first and second primary layers (5', 5") of a thermo-expandable material, said second primary layer (5") conforming to the shape of said metal cap (6) when said device (1) is in use.

2. Device according to Claim 1,
**characterized in that** said second primary layer (5") has a thickness lying in the range of 1 to 2 millimetres.

3. Device according to either one of the preceding claims,
**characterized in that** said first primary layer (5') has a thickness lying in the range of 1 to 2 millimetres.

4. Device according to any one of the preceding claims,
**characterized in that** it includes a secondary layer (3) of thermo-expandable material disposed between said rigid framework (2) and said first primary layer (5').

5. Device according to Claim 4,
**characterized in that** said secondary layer (3) has a thickness lying in the range of 6 to 8 millimetres.

6. Device according to either one of Claims 4 and 5,
**characterized in that** a metal plate (4) is arranged between said secondary layer (3) and said first primary layer (5').

7. Device according to any one of the preceding claims,
**characterized in that** it includes an energy absorption means (8) secured to said framework (2).

8. Device according to any one of the preceding claims,
**characterized in that** it is provided:with a monitoring means for monitoring the pressure exerted by said device (1) on said cap (6).

9. Device according to Claim 8,
**characterized in that** said monitoring means is provided with an optical fibre connected to a monitoring member.

10. Device according to either one of Claims 8 and 9,
**characterized in that** said optical fibre is embedded in said second primary layer (5").

11. Device according to any one of the preceding claims,
**characterized in that** said induction heating means (30) comprises four groups (11, 12, 13, 14) of Litz wires, first and second groups (11, 12) being disposed between the first and second primary layers (5', 5") so as to be situated on the suction side of said cap (6), and third and fourth groups (13, 14) being disposed between the first and second primary layers (5', 5") so as to be situated on the pressure side of said metal cap (6).

12. Device according to Claim 11,
**characterized in that** said first group (11) is separated from said second group (12) so as to free a non-heated space, said third group (13) also being separated from said fourth group (14).

13. Method for bonding a metal cap (6) for protecting a leading edge of an aircraft aerofoil, an adhesive (9) being disposed between said metal cap (6) and said aerofoil (7), a bonding device (1) according to any one of Claims 1 to 12 being arranged around an outside face (F1) of said metal cap (6),
**characterized in that** the following steps are performed in succession:
a) induction heating said metal cap (6) with the help of said bonding device (1) to reach a first temperature (t1) at which said adhesive (9) is liquefied so as to wet said aerofoil (7) and said metal cap (6);
b) at the end of a first duration (d1), increasing the temperature of said cap to reach a second temperature (t2) enabling the polymerization of said adhesive (9);
c) at the end of a second duration (d2), increasing the temperature of said metal cap (6) to reach a third temperature (t3) in order to enable complete and uniform polymerization; and
d) at the end of a third duration (d3), reducing the temperature of said metal cap.

14. Method according to Claim 13,
**characterized in that** said first duration (d1) lies in the range of 10 to 20 minutes.

15. Method according to either one of Claims 13 and 14,
**characterized in that** said second duration (d2) lies in the range of 10 to 20 minutes.

16. Method according to any one of Claims 13 to 15,
**characterized in that** said third duration (d3) lies in the range of 3 to 10 minutes.

17. Method according to any one of Claims 13 to 16,
**characterized in that** said second duration (d2) terminates when the polymerization of said adhesive (9) reaches 60% to 80% of complete polymerization of the adhesive (9).

18. Method according to any one of the Claims 13 to 17, **characterized in that** said third temperature (t3) is higher than the theoretical polymerization temperature of the adhesive (9).

## Patentansprüche

1. Vorrichtung (1) zum Kleben eines Schutzdeckblechs (6) einer Flügelvorderkante eines Luftfahrzeugs, wobei das Deckblech (6) mit einem Klebstoff (9) auf den Flügel (7) geklebt werden muss, wobei die Vorrichtung ein steifes Gehäuse (2) aufweist, in welches ein Induktionsheizmittel (30) für das Deckblech (6) eingeführt ist,
**dadurch gekennzeichnet, dass** das Induktionsheizmittel (30) zwischen einer ersten und einer zweiten primären Schicht (5', 5") aus einem thermoexpansiblen Material angeordnet ist, wobei die zweite Primärschicht (5") während der Verwendung der Vorrichtung (1) die Form des Deckblechs (6) annimmt.

2. Vorrichtung nach Anspruch 1,
**dadurch gekennzeichnet, dass** die zweite primäre Schicht (5") eine Dicke zwischen 1 mm und 2 mm aufweist.

3. Vorrichtung nach einem der vorstehenden Ansprüche,
**dadurch gekennzeichnet, dass** die erste primäre Schicht (5') eine Dicke zwischen 1 mm und 2 mm aufweist.

4. Vorrichtung nach einem der vorstehenden Ansprüche,
**dadurch gekennzeichnet, dass** sie eine sekundäre Schicht (3) aus einem thermoexpansiblen Material aufweist, die zwischen dem steifen Gehäuse (3) und der ersten primären (5') angeordnet ist.

5. Vorrichtung nach Anspruch 4,
**dadurch gekennzeichnet, dass** die sekundäre Schicht (3) eine Dicke zwischen 6 mm bis 8 mm aufweist.

6. Vorrichtung nach einem der Ansprüche 4 oder 5,
**dadurch gekennzeichnet, dass** eine Metallplatte (4) zwischen der sekundären Schicht (3) und der ersten primären Schicht (5') angeordnet ist.

7. Vorrichtung nach einem der vorstehenden Ansprüche,
**dadurch gekennzeichnet, dass** sie ein Energieabsorptionsmittel (8) aufweist, welches mit dem Gehäuse (2) fest verbunden ist.

8. Vorrichtung nach einem der vorstehenden Ansprüche,
**dadurch gekennzeichnet, dass** sie mit einem Mittel zur Steuerung des durch die Vorrichtung (1) auf das Deckblech (6) ausgeübten Drucks ausgerüstet ist.

9. Vorrichtung nach Anspruch 8,
**dadurch gekennzeichnet, dass** das Mittel zur Steuerung mit einer optischen Faser versehen ist, welches mit einem Steuerorgan verbunden ist.

10. Vorrichtung nach einem der Ansprüche 8 oder 9,
**dadurch gekennzeichnet, dass** die optische Faser in die zweite primäre Schicht (5") versenkt ist.

11. Vorrichtung nach einem der vorstehenden Ansprüche,
**dadurch gekennzeichnet, dass** das Induktionsheizmittel (30) vier Gruppen (11, 12, 13, 14) von Kabel-Litzen aufweist, wobei eine erste und eine zweite Gruppe (11, 12) zwischen den ersten und zweiten primären Schichten (5, 5') derart angeordnet sind, dass sie auf der Saugseite des Deckblechs (6) gelegen sind und wobei eine dritte und eine vierte Gruppe (13, 14) zwischen den ersten und zweiten primären Schichten (5', 5") derart angeordnet sind, dass sie auf der Druckseite des Deckblechs (6) gelegen sind.

12. Vorrichtung nach Anspruch 11,
**dadurch gekennzeichnet, dass** die erste Gruppe (11) von der zweiten Gruppe (12) derart beabstandet angeordnet ist, dass sie einen nicht beheizten Bereich freilässt und die dritte Gruppe (13) ebenfalls von der vierten Gruppe (14) beabstandet angeordnet ist.

13. Verfahren zum Kleben eines Schutzdeckblechs (6) auf der Vorderkante eines Flügels eines Luftfahrzeugs, wobei ein Klebstoff (9) zwischen dem Deckblech (6) und dem Flügel (7) angeordnet ist und eine Vorrichtung zum Kleben (1) gemäß einem der Ansprüche 1 bis 12 um eine äußere Oberfläche (F1) des Deckblechs (6) herum angeordnet ist,
**dadurch gekennzeichnet, dass** aufeinanderfolgend in den folgenden Schritten vorgegangen wird:
a) Das Deckblech (6) wird mittels der Klebevorrichtung (1) mittels Induktion aufgeheizt, um eine erste Temperatur (t1) zu erreichen, bei der der Klebstoff (9) verflüssigt ist, um den Flügel (7) und das Deckblech (6) zu benetzen,
b) nach dem Verstreichen eines ersten Zeitintervalls (d1) wird die Temperatur des Deckblechs erhöht, um eine zweite Temperatur (t2) zu erreichen, die die Polymerisation des Klebstoffs (9) ermöglicht,
c) nach dem Verstreichen eines zweiten Zeitintervalls (d2) wird die Temperatur des Deckblechs (6) weiter erhöht, um eine dritte Temperatur (t3) zu erreichen, um eine vollständige und homogene Polymerisation zu erreichen, und
d) nach dem Verstreichen eines dritten Zeitintervalls (d3) die Temperatur des Deckblechs abgesenkt wird.

14. Verfahren nach Anspruch 13,
**dadurch gekennzeichnet, dass** die Dauer des ersten Zeitintervalls (d1) zwischen 10 und 20 Minuten beträgt.

15. Verfahren nach einem der Ansprüche 13 oder 14,
**dadurch gekennzeichnet, dass** die Dauer des zweiten Zeitintervalls (d2) zwischen 10 und 20 Minuten beträgt.

16. Verfahren nach einem der Ansprüche 13 bis 15,
**dadurch gekennzeichnet, dass** die Dauer des dritten Zeitintervalls (d3) zwischen 3 und 10 Minuten liegt.

17. Verfahren nach einem der Ansprüche 13 bis 16,
**dadurch gekennzeichnet, dass** die zweite Dauer (d2) endet, während die Polymerisation des Klebstoffs (9) 60 % bis 80 % der vollständigen Polymerisation des Klebstoffes (9) erreicht.

18. Verfahren nach einem der Ansprüche 13 bis 17,
**dadurch gekennzeichnet, dass** die dritte Temperatur (t3) höher ist als die theoretische Polymerisationstemperatur des Klebstoffes (9).
